# EUROPEAN PATENT APPLICATION

(11) **EP 4 438 173 A1**
(43) Date of publication of application: **02.10.2024**
(21) Application number: 23305436.0
(22) Date of filing: 29.03.2023
(51) Int. Cl.: B01J 31/00, C07F 17/02, C07F 19/00

(54) **NANOCATALYST SYSTEMS AND THEIR USE FOR H2 DELIVERY FROM SOLID STORAGE**

(71) Applicant: Université de Bourgogne, 21000 Dijon (FR); Centre National de la Recherche Scientifique, 75016 Paris (FR)
(72) Inventor: HIERSO, Jean-Cyrille, 21000 Dijon (FR); MBOYI, Clève Dionel, 21600 Longvic (FR); POINSOT, Didier, 21800 Chevigny Saint Sauveur (FR); BOUZID, Moad, 21240 Talant (FR); DOMENICHINI, Bruno, 21000 Dijon (FR); KAHN, Myrtil L., 31000 Toulouse (FR)
(74) Representative: Bandpay & Greuter

(57) **Abstract**

The present invention relates to metallic nanoparticles stabilized by a metallocene ligand. Nanoparticles, and networks of nanoparticles, of controlled small sizes below 10 nm, are used and recycled for the efficient delivering, in high rate, of hydrogen gas H₂, extracted from solid organic sources in hydrolysis and solvolysis reactions.

## Description

### Technical field

The present invention relates to nanoparticles stabilized with ditopic and polytopic metallocene ligands, and networks of these nanoparticles, and their use for the delivery of hydrogen (H₂) from chemical solid storage using amine-boranes.

### Background art

France aims for carbon neutrality in 2050 (Law N°2019-1147 of 8 November 2019 relative to energy and climate). Among the objectives set by government, there is a focus on development of H₂ solution for the future energy mix.

The existing solutions for H₂ storage are gaseous and/or liquid. However, there are risks of accident linked to H₂, such as fire or explosion. Specific regulations relating to H₂ storage and conception and exploitation of H₂ distribution resorts have thus been created.

Moreover, the storage of H₂ under gaseous or liquid form requires huge volume of storage.

There is thus a need to develop safer and economical routes for H₂ storage, notably in link with transportation and mobility applications but also concerning societal acceptability.

The chemical storage of H₂ under solid form represents a secure and clean energy vector. It is for example known the solid storage of H₂ under the form of amine-borane. However, it needs to provide method for controlled and secured delivery of H₂ via solid route. There is also a need to provide such method than can be renewable and cost effective and that enables to deliver high amount of H₂ in reduce time.

### Summary of the invention

The present invention relates to metallic nanoparticle stabilized by metallocene ligands,
wherein each 5-membered cycle of the metallocene is substituted by at least one group, identical or different, selected in the group consisting of:
   - (CH₂)ₙ-XR²R³ wherein
      - n is 0, 1, 2, 3 or 4, preferably 0 or 1, preferably 0;
      - X is a metal-coordinating atom, preferably P, N, B, or Al, preferably P, N or B, preferably P or N, preferably P;
      - R² and R³, identical or different, represent a C₅-C₁₀ aryl group, preferably phenyl; a C₅-C₁₀ cycloalkyl group, preferably cyclohexyl; a 5 to 10-membered heteroaryl comprising 1 or 2 heteroatoms, preferably O or N, and optionally substituted for example by C1-C5-alkyl group linear or branched, for example furyl; a 5 to 10-membered heterocycle comprising 1 or 2 heteroatoms, preferably O or N; or a C₁-C₃₀ preferably C₁-C₁₀ alkyl, more preferably C₁-C₅ alkyl group, linear or branched, saturated or unsaturated; preferably R² and R³, identical or different, represent phenyl, cyclohexyl, iso-propyl, tert-butyl or furyl; or R² and R³ can form with X, preferably when X is P, a 5 to 10-membered heterocycle that can comprise one heteroatom chosen among O, N, S, preferably N, and optionally substituted for example by C1-C5-alkyl group linear or branched and/or N(C1-C5-alkyl group linear or branched)₂;
   - (CH₂)ₙ-COOR, wherein
      - n is 0, 1, 2, 3 or 4, preferably 0 or 1, preferably 0;
      - R, identical or different, represent H; a C₅-C₁₀ aryl group, preferably phenyl; a C₅-C₁₀ cycloalkyl group, preferably cyclohexyl; or a C₁-C₃₀ preferably C₁-C₁₀ alkyl, more preferably C₁-C₅ alkyl group, linear or branched, saturated or unsaturated; preferably R is H;
   - (CH₂)ₙCOR, wherein
      - n is 0, 1, 2, 3 or 4, preferably 0 or 1, preferably 0;
      - R, identical or different, is H; a C₅-C₁₀ aryl group, preferably a phenyl group; a C₅-C₁₀ cycloalkyl group, preferably cyclohexyl; or a C₁-C₃₀ preferably C₁-C₁₀ alkyl, more preferably C₁-C₅ alkyl group, linear or branched, saturated or unsaturated; preferably R is H;
   - (CH₂)ₙCONR⁴R⁵, wherein
      - n is 0, 1, 2, 3 or 4, preferably 0 or 1, preferably 0;
      - R⁴ and R⁵, identical or different, represent H, a C₅-C₁₀ aryl group, preferably a phenyl group; a C₅-C₁₀ cycloalkyl group, preferably cyclohexyl; or a C₁-C₃₀ preferably C₁-C₁₀ alkyl, more preferably C₁-C₅ alkyl group, linear or branched, saturated or unsaturated or R⁴ and R⁵ can form together with the N atom a 5 to 10-membered heterocycle; preferably R⁴ and R⁵ are H;
   with the condition that at least one of the 5-membered cycle of the metallocene is substituted by at least one (CH₂)ₙ-PR²R³ group;
   wherein each 5-membered cycle of the metallocene is optionally substituted by one or more, preferably one, R¹, identical or different, selected in the group consisting of a group of formula CR⁶₃ wherein R⁶ is a C₁-C₃₀ alkyl, preferably C₁-C₁₀ alkyl, more preferably C₁-C₅ alkyl group, linear or branched, saturated or unsaturated optionally comprising at least one heteroatom preferably O or N; a gem-dimethyl group of following formula R⁷-C(CH₃)₂, wherein R⁷ is a C₁-C₃₀ alkyl, preferably C₁-C₁₀ alkyl, more preferably C₁-C₅ alkyl group, linear or branched, saturated or unsaturated optionally comprising at least one heteroatom preferably O or N;
wherein the metal of the metallocene is selected in the group consisting of Fe, Ni, Co, Cr, V, Rh, Ru, Os, Re, preferably Fe; and
wherein the atomic ratio of the metal of the nanoparticle to the metal of the metallocene is equal or greater than 5/1, preferably comprised between 5/1 and 20/1, preferably comprised between 10/1 and 20/1.

Preferably, the metal of the nanoparticle is ruthenium, nickel, platinum, rhodium or cobalt, preferably ruthenium or nickel, preferably nickel.

According to embodiments, in the ligands of the invention:
- in (CH₂)ₙ-XR²R³ :
   - n is 0 or 1, preferably 0;
   - X is P or N, preferably P;
   - R² and R³, identical or different, represent a C₅-C₁₀ aryl group, preferably phenyl; a C₅-C₁₀ cycloalkyl group, preferably cyclohexyl; or a C₁-C₃₀ preferably C₁-C₁₀ alkyl, more preferably C₁-C₅ alkyl group, linear or branched, saturated or unsaturated; preferably R² and R³, identical or different, represent phenyl or cyclohexyl;
- in (CH₂)ₙ-COOR:
   - n is 0 or 1, preferably 0;
   - R, identical or different, is H; a C₅-C₁₀ aryl group, preferably phenyl; a C₅-C₁₀ cycloalkyl group, preferably cyclohexyl; or a C₁-C₃₀ preferably C₁-C₁₀ alkyl, more preferably C₁-C₅ alkyl group, linear or branched, saturated or unsaturated; preferably R is H;
- In (CH₂)ₙCONR⁴R⁵:
   - n is 0 or 1, preferably 0;
   - R⁴ and R⁵, identical or different, represent H, a C₅-C₁₀ aryl group, preferably phenyl; a C₅-C₁₀ cycloalkyl group, preferably cyclohexyl; or a C₁-C₃₀ preferably C₁-C₁₀ alkyl, more preferably C₁-C₅ alkyl group, linear or branched, saturated or unsaturated; preferably R⁴ and R⁵ are H.

Preferably, the metal of the metallocene is Fe.

According to embodiments, the metallocene is chosen among compound having the following formula (I), (II) or (III): 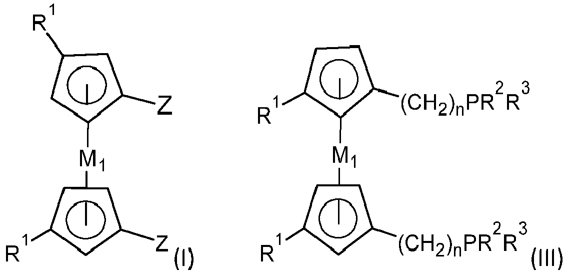 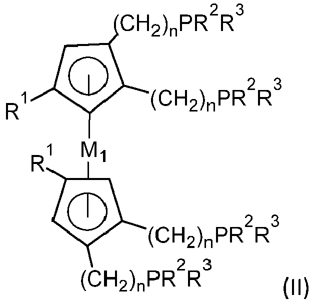 wherein:
n is 0 or 1 ;
Z is selected in the group consisting of:
   - (CH₂)ₙ-XR²R³ wherein
      - R² and R³, identical or different, represent a C₅-C₁₀ aryl group, preferably phenyl; a C₅-C₁₀ cycloalkyl group, preferably cyclohexyl; a 5 to 10-membered heteroaryl comprising 1 or 2 heteroatoms, preferably O or N, and optionally substituted for example by C1-C5-alkyl group linear or branched, for example furyl; a 5 to 10-membered heterocycle comprising 1 or 2 heteroatoms, preferably O or N; or a C₁-C₃₀ preferably C₁-C₁₀ alkyl, more preferably C₁-C₅ alkyl group, linear or branched, saturated or unsaturated; preferably R² and R³, identical or different, represent phenyl, cyclohexyl, iso-propyl, tert-butyl or furyl; or R² and R³ can form with X, preferably when X is P, a 5 to 10-membered heterocycle that can comprise one heteroatom chosen among O, N, S, preferably N, and optionally substituted for example by C1-C5-alkyl group linear or branched and/or N(C1-C5-alkyl group linear or branched)₂;

   - (CH₂)ₙ-COOR, wherein
      - R, identical or different, is H; a C₅-C₁₀ aryl group, preferably phenyl; a C₅-C₁₀ cycloalkyl group, preferably cyclohexyl; or a C₁-C₃₀ preferably C₁-C₁₀ alkyl, more preferably C₁-C₅ alkyl group, linear or branched, saturated or unsaturated; preferably R is H;
   - (CH₂)ₙCOR, wherein
      - R, identical or different, is H; a C₅-C₁₀ aryl group, preferably phenyl; a C₅-C₁₀ cycloalkyl group, preferably cyclohexyl; or a C₁-C₃₀ preferably C₁-C₁₀ alkyl, more preferably C₁-C₅ alkyl group, linear or branched, saturated or unsaturated; preferably R is H;
   - (CH₂)ₙCONR⁴R⁵, wherein
      - R⁴ and R⁵, identical or different, represent H; a C₅-C₁₀ aryl group, preferably a phenyl group; a C₅-C₁₀ cycloalkyl group, preferably cyclohexyl; or a C₁-C₃₀ preferably C₁-C₁₀ alkyl, more preferably C₁-C₅ alkyl group, linear or branched, saturated or unsaturated; preferably R⁴and R⁵ are H;
      preferably Z is (CH₂)ₙ-XR²R³, (CH₂)ₙ-COOR, (CH₂)ₙCONR⁴R⁵;
with the condition that at least one of the 5-membered cycle of the metallocene is substituted by a (CH₂)ₙ-PR²R³ group;
R¹, identical or different, selected in the group consisting of a group of formula CR⁶₃ wherein R⁶ is a C₁-C₃₀ alkyl, preferably C₁-C₁₀ alkyl, more preferably C₁-C₅ alkyl group, linear or branched, saturated or unsaturated optionally comprising at least one heteroatom preferably O or N; a gem-dimethyl group of following formula R⁷-C(CH₃)₂, wherein R⁷ is a C₁-C₃₀ alkyl, preferably C₁-C₁₀ alkyl, more preferably C₁-C₅ alkyl group, linear or branched, saturated or unsaturated optionally comprising at least one heteroatom preferably O or N; and
M₁ is selected in the group consisting of Fe, Ni, Co, Cr, V, Rh, Ru, Os, Re, preferably Fe.

Preferably, the metallocene is chosen among compound having the following formula (I) or (II) 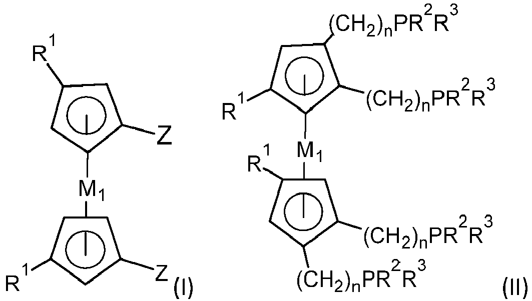 wherein Z, identical or different is (CH₂)ₙ-PR²R³
n is 0 or 1,
R² and R³, identical or different represent, a C₅-C₁₀ aryl group, preferably a phenyl group; a C₅-C₁₀ cycloalkyl group, preferably cyclohexyl; or a C₁-C₃₀ preferably C₁-C₁₀ alkyl, more preferably C₁-C₅ alkyl group, linear or branched, saturated or unsaturated, preferably R² and R³, identical or different represent phenyl, cyclohexyl, iso-propyl, tert-butyl or furyl;
R¹, identical or different, selected in the group consisting of a group of formula CR⁶₃ wherein R⁶ is a C₁-C₃₀ alkyl, preferably C₁-C₁₀ alkyl, more preferably C₁-C₅ alkyl group, linear or branched, saturated or unsaturated optionally comprising at least one heteroatom preferably O or N; a gem-dimethyl group of following formula R⁷-C(CH₃)₂, wherein R⁷ is a C₁-C₃₀ alkyl, preferably C₁-C₁₀ alkyl, more preferably C₁-C₅ alkyl group, linear or branched, saturated or unsaturated optionally comprising at least one heteroatom preferably O or N.

In the above embodiments, R¹ is preferably tert-butyl.

Advantageously, each 5-membered cycle of the metallocene is substituted by at least one group, identical or different, of formula (CH₂)ₙ-XR²R³ such as defined above with X is P, and the nanoparticles are arranged in the form of a network of different nanoparticles linked by the metallocene ligand.

The invention also relates to:
- the use of a metallic nanoparticle according to any one of claims 1 to 8, as catalyst for the recovery of H₂ by hydrolysis or solvolysis of amine-borane or hydrazine-borane compounds, wherein the solvent is preferentially a polar hydrogen donor, more preferentially an alcohol, more preferentially methanol or ethanol; and to
- a process for recovering H₂ from amine-borane or hydrazine-borane comprising hydrolysis or solvolysis of the amine-borane in the presence of a metallic nanoparticle according to any one of claims 1 to 8.

Preferably, the amine-borane is of formula NR₂'H-BH₃ or BH₃-NR₂'-(CH₂)ₘ-NR₂'-BH₃, wherein R' identical or different, represent H, a C₅-C₁₀ aryl group, preferably a phenyl group; or a C₁-C₃₀, preferably C₁-C₁₀ alkyl, more preferably C₁-C₅ alkyl group, linear or branched, saturated or unsaturated, m is 1, 2 or 3, preferably, the amine-borane is NH₃-BH₃ (AB), NMeH₂-BH₃ (methylamineborane MeAB), NMe₂H-BH₃ (dimethyl amine-borane DMAB) or H₃B-NH₂CH₂CH₂H₂N-BH₃ (ethylene diamine bisborane EDAB).

In one embodiment, the solvolysis is carried out using ethanol or methanol.

Preferably, the hydrolysis or solvolysis is carried out at a temperature comprised between -90 °C and 100 °C, preferably between -40 °C and 80 °C, more preferentially between 0 °C and 30 °C, more preferentially 20 °C.

In one embodiment, the process according to the invention further comprises a step of recycling the nanoparticles, preferably carried out by recovering the nanoparticles and washing the recovered nanoparticles with the solvent used for the hydrolysis or solvolysis of the amine-borane or hydrazine-borane.

### Brief description of the Figure

The ditopic and polytopic metallocene ligands present the advantage of a controlled conformation, this enables to stabilize the surface of the individual nanoparticles by strong bonds, but also the advantage to link the nanoparticles together in dense networks. The formation of a network during nanoparticles growth advantageously enables to control the size of the nanoparticles, preferably between 1 and 2 nm. Such small size advantageously leads to high activity because of large exposed metal surface. This approach to stabilize nanoparticles, without external supplementary support of the oxide or carbon also makes it possible to overcome the possible instability of isolated nanoparticles.

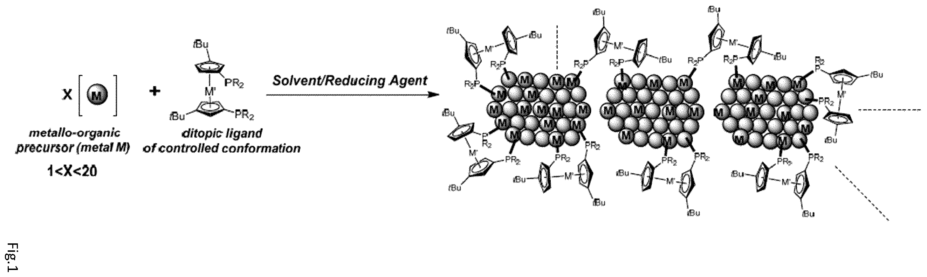

The Figure 1 represents a fragment of three nanoparticles stabilized with ditopic metallocene ligand according to the invention and forming a network.

### Detailed description

The invention is now described in more detail and in a non-limiting manner in the following description.

The following terms and expressions contained herein are defined as follows.

As used herein, the term "C₁ -Cₙ alkyl" refers to a linear, branched or cyclic alkyl group, having 1 to n carbon atoms (CₙH₂ₙ₊₁). Suitable alkyl groups include methyl, ethyl, n-propyl, i-propyl, n-butyl, i-butyl, s-butyl and t-butyl, pentyl and its isomers (e.g., n-pentyl, iso-pentyl), and hexyl and its isomers (e.g., n-hexyl, iso-hexyl).

All other terms used in the description of the present invention have their meanings as is well-known in the art.

The present invention relates to metallic nanoparticles stabilized by metallocene ligands, wherein each 5-membered cycle of the metallocene ligand is substituted by at least one group, identical or different, selected in the group consisting of:
- (CH₂)ₙ-XR²R³ wherein
   - n is 0, 1, 2, 3 or 4, preferably 0 or 1, preferably 0;
   - X is a metal-coordinating atom, preferably P, N, B, or Al, preferably P, N or B, preferably P or N, preferably P;
   - R² and R³, identical or different, represent a C₅-C₁₀ aryl group, preferably phenyl; a C₅-C₁₀ cycloalkyl group, preferably cyclohexyl; a 5 to 10-membered heteroaryl comprising 1 or 2 heteroatoms, preferably O or N, and optionally substituted for example by C1-C5-alkyl group linear or branched, for example furyl; a 5 to 10-membered heterocycle comprising 1 or 2 heteroatoms, preferably O or N; or a C₁-C₃₀ preferably C₁-C₁₀ alkyl, more preferably C₁-C₅ alkyl group, linear or branched, saturated or unsaturated; preferably R² and R³, identical or different, represent phenyl, cyclohexyl, iso-propyl, tert-butyl or furyl; or R² and R³ can form with X, preferably when X is P, a 5 to 10-membered heterocycle that can comprise one heteroatom chosen among O, N, S, preferably N, and optionally substituted for example by C1-C5-alkyl group linear or branched and/or N(C1-C5-alkyl group linear or branched)₂;
- (CH₂)ₙ-COOR, wherein
   - n is 0, 1, 2, 3 or 4, preferably 0 or 1, preferably 0;
   - R, identical or different, represent H; a C₅-C₁₀ aryl group, preferably phenyl; a C₅-C₁₀ cycloalkyl group, preferably cyclohexyl; or a C₁-C₃₀ preferably C₁-C₁₀ alkyl, more preferably C₁-C₅ alkyl group, linear or branched, saturated or unsaturated; preferably R is H;
- (CH₂)ₙCOR, wherein
   - n is 0, 1, 2, 3 or 4, preferably 0 or 1, preferably 0;
   - R, identical or different, is H; a C₅-C₁₀ aryl group, preferably a phenyl group; a C₅-C₁₀ cycloalkyl group, preferably cyclohexyl; or a C₁-C₃₀ preferably C₁-C₁₀ alkyl, more preferably C₁-C₅ alkyl group, linear or branched, saturated or unsaturated; preferably R is H;
- (CH₂)ₙCONR⁴R⁵, wherein
   - n is 0, 1, 2, 3 or 4, preferably 0 or 1, preferably 0;
   - R⁴ and R⁵, identical or different, represent H, a C₅-C₁₀ aryl group, preferably a phenyl group; a C₅-C₁₀ cycloalkyl group, preferably cyclohexyl; or a C₁-C₃₀ preferably C₁-C₁₀ alkyl, more preferably C₁-C₅ alkyl group, linear or branched, saturated or unsaturated or R⁴ and R⁵ can form together with the N atom a 5 to 10-membered heterocycle; preferably R⁴ and R⁵ are H;

with the condition that at least one of the 5-membered cycle of the metallocene is substituted by at least one (CH₂)ₙ-PR²R³ group;
wherein each 5-membered cycle of the metallocene is further optionally substituted by one or more, preferably one, R¹, identical or different, selected in the group consisting of a group of formula CR⁶₃ wherein R⁶ is a C₁-C₃₀ alkyl, preferably C₁-C₁₀ alkyl, more preferably C₁-C₅ alkyl group, linear or branched, saturated or unsaturated optionally comprising at least one heteroatom preferably O or N; a gem-dimethyl group of following formula R⁷-C(CH₃)₂, wherein R⁷ is a C₁-C₃₀ alkyl, preferably C₁-C₁₀ alkyl, more preferably C₁-C₅ alkyl group, linear or branched, saturated or unsaturated optionally comprising at least one heteroatom preferably O or N;
wherein the metal of the metallocene is selected in the group consisting of Fe, Ni, Co, Cr, V, Rh, Ru, Os, Re; preferably Fe; and
wherein the atomic ratio of the metal of the nanoparticle to the metal of the metallocene is equal or greater than 5/1, preferably comprised between 5/1 and 20/1, preferably comprised between 10/1 and 20/1.

Preferably, the metallic nanoparticles have a mean diameter, as measured from transmission electronic microscopy in the solid state or diffusion light scattering in liquid dispersion, comprised between 0.5 and 50 nm, preferably between 0.5 and 10 nm, more preferably between 0.5 and 2 nm.

Preferably, in the metallocene ligands of the invention each 5-membered cycle of the metallocene is substituted by at least one group, identical or different, selected in the group consisting of (CH₂)ₙ-XR²R³, (CH₂)ₙ-COOR or (CH₂)ₙCONR⁴R⁵ such as defined above, preferably (CH₂)ₙ-PR²R³, (CH₂)ₙ-COOR or (CH₂)ₙCONR⁴R⁵.

Preferably, in the metallocene ligands of the invention each 5-membered cycle of the metallocene is substituted by at least one group, identical or different, selected in the group consisting of:
- (CH₂)ₙ-XR²R³ wherein
   - n is 0 or 1, preferably 0;
   - X is P or N, preferably P;
   - R² and R³, identical or different, represent a C₅-C₁₀ aryl group, preferably phenyl; a C₅-C₁₀ cycloalkyl group, preferably cyclohexyl; or a C₁-C₃₀ preferably C₁-C₁₀ alkyl, more preferably C₁-C₅ alkyl group, linear or branched, saturated or unsaturated; preferably R² and R³, identical or different, represent phenyl or cyclohexyl;
- (CH₂)ₙ-COOR, wherein
   - n is 0 or 1, preferably 0;
   - R, identical or different, is H; a C₅-C₁₀ aryl group, preferably phenyl; a C₅-C₁₀ cycloalkyl group, preferably cyclohexyl; or a C₁-C₃₀ preferably C₁-C₁₀ alkyl, more preferably C₁-C₅ alkyl group, linear or branched, saturated or unsaturated; preferably R is H;
- (CH₂)ₙCONR⁴R⁵, wherein
   - n is 0 or 1, preferably 0;
   - R⁴ and R⁵, identical or different, represent H, a C₅-C₁₀ aryl group, preferably phenyl; a C₅-C₁₀ cycloalkyl group, preferably cyclohexyl; or a C₁-C₃₀ preferably C₁-C₁₀ alkyl, more preferably C₁-C₅ alkyl group, linear or branched, saturated or unsaturated; preferably R⁴ and R⁵ are H;

with the condition that at least one of the 5-membered cycle of the metallocene is substituted by at least one (CH₂)ₙ-PR²R³ group;
wherein each 5-membered cycle of the metallocene is substituted by one R¹, identical or different, selected in the group consisting of a group of formula CR⁶₃ wherein R⁶ is a C₁-C₃₀ alkyl, preferably C₁-C₁₀ alkyl, more preferably C₁-C₅ alkyl group, linear or branched, saturated or unsaturated optionally comprising at least one heteroatom preferably O or N; a gem-dimethyl group of following formula R⁷-C(CH₃)₂, wherein R⁷ is a C₁-C₃₀ alkyl, preferably C₁-C₁₀ alkyl, more preferably C₁-C₅ alkyl group, linear or branched, saturated or unsaturated optionally comprising at least one heteroatom preferably O or N;
wherein the metal of the metallocene is selected in the group consisting of Fe, Ni, Co, Cr, V, Rh, Ru, Os, Re, preferably Fe.

In one embodiment, the metallocene ligands of the present invention is preferably chosen among compound of formula (I), (II) or (III): 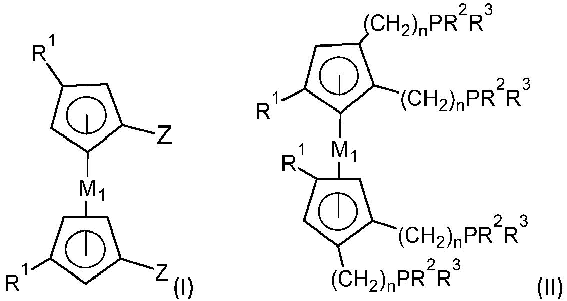 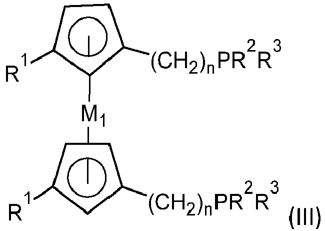 wherein:
n is 0, 1, 2, 3 or 4, preferably 0 or 1, preferably 0;
Z is selected in the group consisting of:
   - (CH₂)ₙ-XR²R³ wherein
      - X is P, N, B or Al, preferably P or N, preferably P;
      - R² and R³, identical or different, represent a C₅-C₁₀ aryl group, preferably phenyl; a C₅-C₁₀ cycloalkyl group, preferably cyclohexyl; a 5 to 10-membered heteroaryl comprising 1 or 2 heteroatoms, preferably O or N, and optionally substituted for example by C1-C5-alkyl group linear or branched, for example furyl; a 5 to 10-membered heterocycle comprising 1 or 2 heteroatoms, preferably O or N; or a C₁-C₃₀ preferably C₁-C₁₀ alkyl, more preferably C₁-C₅ alkyl group, linear or branched, saturated or unsaturated; preferably R² and R³, identical or different, represent phenyl, cyclohexyl, iso-propyl, tert-butyl or furyl; or R² and R³ can form with X, preferably when X is P, a 5 to 10-membered heterocycle that can comprise one heteroatom chosen among O, N, S, preferably N, and optionally substituted for example by C1-C5-alkyl group linear or branched and/or N(C1-C5-alkyl group linear or branched)₂;

   - (CH₂)ₙ-COOR, wherein
      - R, identical or different, is H; a C₅-C₁₀ aryl group, preferably phenyl; a C₅-C₁₀ cycloalkyl group, preferably cyclohexyl; or a C₁-C₃₀ preferably C₁-C₁₀ alkyl, more preferably C₁-C₅ alkyl group, linear or branched, saturated or unsaturated; preferably R is H;
   - (CH₂)ₙCOR, wherein
      - R, identical or different, is H; a C₅-C₁₀ aryl group, preferably phenyl; a C₅-C₁₀ cycloalkyl group, preferably cyclohexyl; or a C₁-C₃₀ preferably C₁-C₁₀ alkyl, more preferably C₁-C₅ alkyl group, linear or branched, saturated or unsaturated; preferably R is H;
   - (CH₂)ₙCONR⁴R⁵, wherein
      - R⁴ and R⁵, identical or different, represent H; a C₅-C₁₀ aryl group, preferably a phenyl group; a C₅-C₁₀ cycloalkyl group, preferably cyclohexyl; or a C₁-C₃₀ preferably C₁-C₁₀ alkyl, more preferably C₁-C₅ alkyl group, linear or branched, saturated or unsaturated; preferably R⁴and R⁵ are H;
with the condition for metallocene of formula (I) that at least one of the 5-membered cycle of the metallocene is substituted by a (CH₂)ₙ-PR²R³ group;
R¹, identical or different, is selected in the group consisting of a group of formula CR⁶₃ wherein R⁶ is a C₁-C₃₀ alkyl, preferably C₁-C₁₀ alkyl, more preferably C₁-C₅ alkyl group, linear or branched, saturated or unsaturated optionally comprising at least one heteroatom preferably O or N; a gem-dimethyl group of following formula R⁷-C(CH₃)₂, wherein R⁷ is a C₁-C₃₀ alkyl, preferably C₁-C₁₀ alkyl, more preferably C₁-C₅ alkyl group, linear or branched, saturated or unsaturated optionally comprising at least one heteroatom preferably O or N; preferably R¹ is a group of formula CR⁶₃ wherein R⁶ is a C₁-C₃₀ alkyl, preferably C₁-C₁₀ alkyl, more preferably C₁-C₅ alkyl group, linear or branched, saturated or unsaturated; and
M₁ is selected in the group consisting of Fe, Ni, Co, Cr, V, Rh, Ru, Os, Re, preferably Fe.

Preferably, when the metallocene is of formula (I) above:
n is 0 or 1, preferably 0;
Z is selected in the group consisting of:
   - (CH₂)ₙ-XR²R³ wherein
      - X is P, N, B or Al, preferably P or N, preferably P;
      - R² and R³, identical or different, represent a C₅-C₁₀ aryl group, preferably phenyl; a C₅-C₁₀ cycloalkyl group, preferably cyclohexyl; a 5 to 10-membered heteroaryl comprising 1 or 2 heteroatoms, preferably O or N, for example furyl; a 5 to 10-membered heterocycle comprising 1 or 2 heteroatoms, preferably O or N; or a C₁-C₃₀ preferably C₁-C₁₀ alkyl, more preferably C₁-C₅ alkyl group, linear or branched, saturated or unsaturated; preferably R² and R³, identical or different represent phenyl, cyclohexyl, iso-propyl, tert-butyl or furyl, preferably phenyl or cyclohexyl;
   - (CH₂)ₙ-COOR, wherein
      - R, identical or different, is H; a C₅-C₁₀ aryl group, preferably phenyl; a C₅-C₁₀ cycloalkyl group, preferably cyclohexyl; or a C₁-C₃₀ preferably C₁-C₁₀ alkyl, more preferably C₁-C₅ alkyl group, linear or branched, saturated or unsaturated; preferably R is H;
   - (CH₂)ₙCONR⁴R⁵, wherein
      - R⁴ and R⁵, identical or different, represent H; a C₅-C₁₀ aryl group, preferably a phenyl group; a C₅-C₁₀ cycloalkyl group, preferably cyclohexyl; or a C₁-C₃₀ preferably C₁-C₁₀ alkyl, more preferably C₁-C₅ alkyl group, linear or branched, saturated or unsaturated; preferably R⁴and R⁵ are H;
   with the condition for metallocene of formula (I) that at least one of the 5-membered cycle of the metallocene is substituted by a (CH₂)ₙ-PR²R³ group.

Preferably, when the metallocene is of formula (I) above:
n is 0 or 1, preferably 0;
Z is selected in the group consisting of:
   - (CH₂)ₙ-XR²R³ wherein
      - X is P;
      - R² and R³, identical or different, represent a C₅-C₁₀ aryl group, preferably phenyl; a C₅-C₁₀ cycloalkyl group, preferably cyclohexyl; a 5 to 10-membered heteroaryl comprising 1 or 2 heteroatoms, preferably O or N, for example furyl; a 5 to 10-membered heterocycle comprising 1 or 2 heteroatoms, preferably O or N; or a C₁-C₃₀ preferably C₁-C₁₀ alkyl, more preferably C₁-C₅ alkyl group, linear or branched, saturated or unsaturated; preferably R² and R³, identical or different represent phenyl, cyclohexyl, iso-propyl, tert-butyl or furyl, preferably phenyl or cyclohexyl;
   - (CH₂)ₙ-COOR, wherein
      - R, identical or different, is H; a C₅-C₁₀ aryl group, preferably phenyl; a C₅-C₁₀ cycloalkyl group, preferably cyclohexyl; or a C₁-C₃₀ preferably C₁-C₁₀ alkyl, more preferably C₁-C₅ alkyl group, linear or branched, saturated or unsaturated; preferably R is H;
   - (CH₂)ₙCONR⁴R⁵, wherein
      - R⁴ and R⁵, identical or different, represent H; a C₅-C₁₀ aryl group, preferably a phenyl group; a C₅-C₁₀ cycloalkyl group, preferably cyclohexyl; or a C₁-C₃₀ preferably C₁-C₁₀ alkyl, more preferably C₁-C₅ alkyl group, linear or branched, saturated or unsaturated; preferably R⁴ and R⁵ are H;
   with the condition for metallocene of formula (I) that at least one of the 5-membered cycle of the metallocene is substituted by a (CH₂)ₙ-PR²R³ group.

Preferably, the metallocene ligand of the present invention is of formula (I) or (II), preferably of formula (I).

In each definition of the metallocene ligands above, preferably in (CH₂)ₙ-XR²R³:
- n is 0;
- X is P;
- R² and R³, identical or different, represent a C₅-C₁₀ aryl group, preferably phenyl; a C₅-C₁₀ cycloalkyl group, preferably cyclohexyl; preferably R² and R³, identical or different represent phenyl or cyclohexyl.

In each definition of the metallocene ligand above, preferably in (CH₂)ₙ-COOR :
- n is 0;
- R is H.

In each definition of the metallocene ligand above, preferably in (CH₂)ₙCONR⁴R⁵:
- n is 0;
- R⁴ and R⁵ are H.

In each definition of the metallocene ligand above:
- preferably in (CH₂)ₙ-XR²R³:
   - n is 0;
   - X is P;
   - R² and R³, identical or different, represent a C₅-C₁₀ aryl group, preferably phenyl; a C₅-C₁₀ cycloalkyl group, preferably cyclohexyl; preferably R² and R³, identical or different represent phenyl or cyclohexyl;
- preferably in (CH₂)ₙ-COOR :
   - n is 0;
   - R is H; and
- preferably in (CH₂)ₙCONR⁴R⁵:
   - n is 0;
   - R⁴ and R⁵ are H.

Preferably, in the metallocene according to the invention, and preferably, in the metallocene of formula (I), (II) or (III), R¹ is tert-butyl.

In each embodiment describing the metallocene ligand according to the invention, the metal of the metallocene is preferably Fe.

Preferably, the metallocene of the present invention is chosen among:

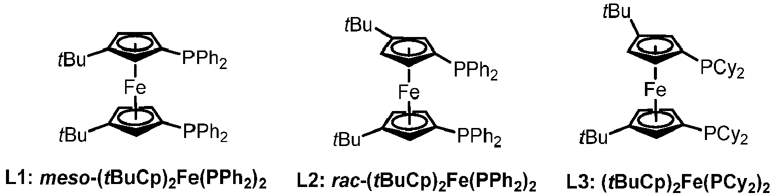

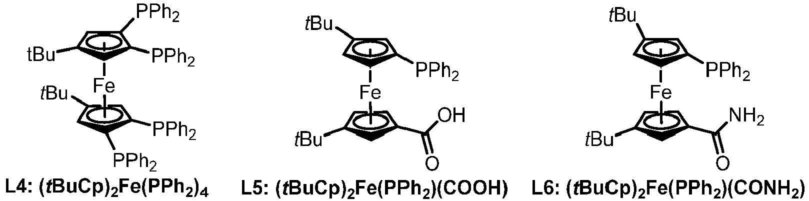

The metallocene ligand according to the present invention can be synthetized by method known from the skilled person and especially following the process disclosed in: Smaliy, R. V.; Beaupérin, M.; Cattey, H.; Meunier, P.; Hierso, J.-C.; Roger, J.; Doucet, H.; Coppel, Y. Conformational Control of Metallocene Backbone by Cyclopentadienyl Ring Substitution: A New Concept in Polyphosphane Ligands Evidenced by "Through-Space" Nuclear Spin-Spin Coupling. Application in Heteroaromatics Arylation by Direct C-H Activation. Organometallics 2009, 28, 3152-3160; FR 3014871; and Highly Functionalized Ferrocenes. Lerayer, E.; Radal, L.; Nguyen, T.-A.; Dwadnia, N.; Cattey, H.; Amardeil, R.; Pirio, N.; Roger, J.; Hierso, J.-C. European Journal of Inorganic Chemistry (2020), 419-445.

When each 5-membered cycle of the metallocene is substituted by at least one group, identical or different, of formula (CH₂)ₙ-XR²R³ such as defined above with X is P, the nanoparticles are arranged in the form of a network of different nanoparticles linked by the metallocene ligand.

Advantageously, when a nanoparticle network is formed each nanoparticle has a mean diameter, as measured from transmission electronic microscopy in the solid state or diffusion light scattering in liquid dispersion, comprised between 0.5 and 10 nm, more preferably between 0.5 and 2 nm. Advantageously, the inventors have found that the network formation enables to control the nanoparticle size to the most reduced size.

The metal of the nanoparticle is preferably, ruthenium, nickel, platinum, rhodium, cobalt, preferably nickel or ruthenium, more preferably ruthenium. This preferable embodiment can be combined with any of definition of the metallocene ligand and preferred metallocene ligand given above.

The nanoparticle stabilized by the metallocene ligand according to the present invention can be prepared by mixing an excess of a metallo-organic complex as molecular precursor of nanoparticles formation with a ditopic or polytopic metallocene ligand, in the presence of a metal reducing agent (preferably hydrogen H₂, LiAlH₄, NaBH₄, etc.) in a suitable solvent (preferably not or weakly coordinating, toluene, THF, etc.) at mild temperature (below 100 °C) for short reaction times (preferably below 24 h). The preferably ditopic metallocene ligand because of its two donor sites and its rotational flexibility is able to coordinate metal atoms either as a chelating agent at the surface of a single nanoparticle, or as a linker between two nanoparticle surfaces. The atomic ratio of the metal of the nanoparticle to the metal of the metallocene is greater than 5/1, preferably comprised between 5/1 and 20/1, preferably comprised between 10/1 and 20/1.

As a typical example, the metallo-organic complex as molecular precursor of nanoparticles formation is the bis(2-methylallyl)(1,5-cyclooctadiene)ruthenium(II) complex. The solvent is preferably the aprotic solvent tetrahydrofuran (THF). The ditopic metallocene ligand is preferably the 1,1'-bis(diphenylphosphino)-3,3'-di-tert-butylferrocene in racemic form (L2). The resulting solution is preferably pressurized preferably with 3 bars of H₂ and heated under stirring at 60 °C for 16 h. The nanoparticles stabilized by the metallocene ligand, according to the present invention, shall be distinguished from metallic complexes, which are formed from one metal and one ligand reaction, or when a ratio of less than five metal for one ligand is used in the synthesis.

The present invention also relates to the use of the nanoparticles stabilized by metallocene ligand as defined above as catalyst for the delivery of H₂ by the hydrolysis or solvolysis of amine-borane and hydrazine-borane compounds. Preferably, the present invention also relates to the use of the nanoparticle stabilized by metallocene ligand, as catalyst for the recovery of H₂ by hydrolysis or solvolysis of ammonia-borane.

The present invention also relates to a process for the delivery of H₂ from amine-borane or hydrazine-borane compounds comprising the hydrolysis, or solvolysis, of the amine-borane or hydrazine-borane compounds in the presence of the nanoparticle as defined above. Preferably, the present invention also relates to a process for delivery of H₂ from amine-borane or hydrazine-borane compounds comprising the hydrolysis or solvolysis of the amine-borane or hydrazine-borane compounds in the presence of the nanoparticle as defined above.

Advantageously, the delivery of H₂ in the present invention can be done either by hydrolysis or solvolysis of amine-borane or hydrazine-borane compounds. The use of water or solvent enables to cover a large range of temperatures to implement the process. Indeed, with water it is possible to implement the process between 0 °C and 100 °C, whereas by choosing another solvent it is possible to implement the process at lower temperature. This is of particular interest for application where the external temperature has an influence, for example in automotive field.

The process can thus be carried out at a temperature comprised between - 90 °C and 100 °C, preferably between -40 °C and 80 °C, more preferentially between 0 °C and 30 °C, more preferentially 20 °C.

Preferably, the solvent is a polar hydrogen donor. The polar hydrogen donor is preferably an alcohol. The alcohol is for example monoalcohol or polyol, preferably monoalcohol. The monoalcohol can be chosen among ethanol or methanol. The polyol is for example polyalkylene glycol, preferably polyethyelene glycol. Preferably, the solvent is methanol or ethanol.

The amine-borane that can be used in the present invention is not particularly limited. Preferably, the amine is of formula NR₂'H→BH₃ or BH₃←NR₂'-(CH₂)ₘ-NR₂'→BH₃, wherein R' identical or different, represent H, a C₅-C₁₀ aryl group, preferably phenyl; or a C₁-C₃₀, preferably C₁-C₁₀ alkyl, more preferably C₁-C₅ alkyl group, linear or branched, saturated or unsaturated; m is 1, 2 or 3. Preferably, the amine-borane is NH₃→BH₃ (ammonia-borane, AB), NMeH₂→BH₃ (methylamine borane, MeAB), NMe₂H→BH₃ (dimethyl amine-borane, DMAB) or H₃B←NH₂(CH₂)₂H₂N→BH₃ (ethylene diamine bis-borane, EDAB). The hydrazine-borane according to the invention is a compound of formula N₂H₄-BH₃ (HB).

Preferably, in the process of delivery of H₂ from amine-borane or hydrazine-borane according to the invention, the nanoparticle according to the invention is used so that the molar ratio of metal from the nanoparticle to the amine-borane is comprised between 0.0001 and 1, preferably between 0.01 and 0.02.

Advantageously, the nanoparticle according to the invention can be recycled and reused in the process. The recycling of the nanoparticle according to the invention can be done by recovering the nanoparticle and then washing the recovered nanoparticles with the solvent used for the hydrolysis or solvolysis of the amine-borane or hydrazine-borane, possibly in combination or with non-polar hydrocarbon solvent (preferably pentane). The recovery of the nanoparticle according to the invention can be done by any method known by the skilled person and for example by centrifugation.

The invention is now described with respect to the following non limiting examples.

### Examples

### Materials and Methods:

### General synthetic conditions

All reactions were performed under an atmosphere of dry argon in Schlenk tubes, Fisher-Porter bottle or two-necked flask. All reagents and precursors were purchased from Commercial Suppliers and used without purifications. Bis(2-methylallyl)(1,5-cyclooctadiene)ruthenium(II) complex was purchased from commercial sources. All the ligands were synthesized according to the processes described in the scientific literature, and especially referring to: Smaliy, R. V.; Beaupérin, M.; Cattey, H.; Meunier, P.; Hierso, J.-C.; Roger, J.; Doucet, H.; Coppel, Y. Conformational Control of Metallocene Backbone by Cyclopentadienyl Ring Substitution: A New Concept in Polyphosphane Ligands Evidenced by "Through-Space" Nuclear Spin-Spin Coupling. Application in Heteroaromatics Arylation by Direct C-H Activation. Organometallics 2009, 28, 3152-3160; FR 3014871; Highly Functionalized Ferrocenes. Lerayer, E.; Radal, L.; Nguyen, T.-A.; Dwadnia, N.; Cattey, H.; Amardeil, R.; Pirio, N.; Roger, J.; Hierso, J.-C. European Journal of Inorganic Chemistry (2020), 419-445

### Synthesis of ligands L1 to L6

### Preparation of L1

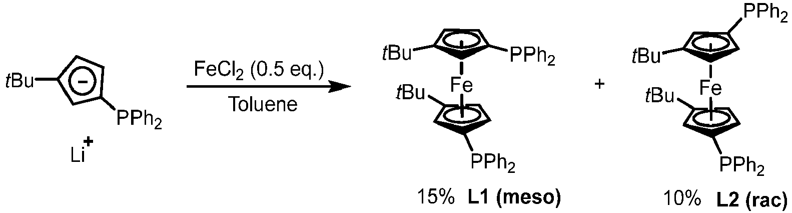

### Preparation of L2 and L3

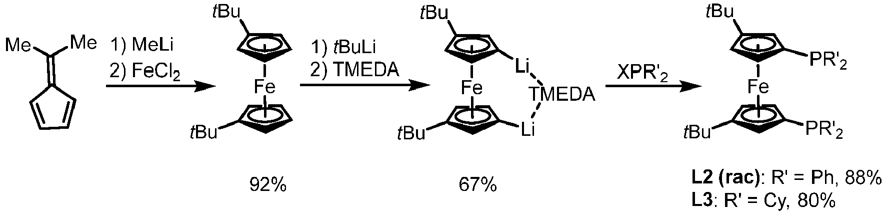

### Preparation of L4

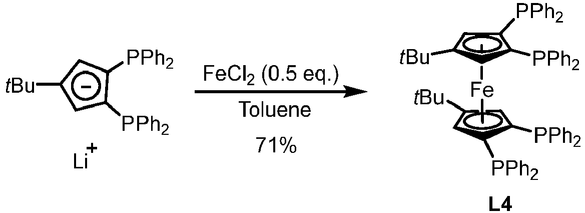

### Preparation of L5

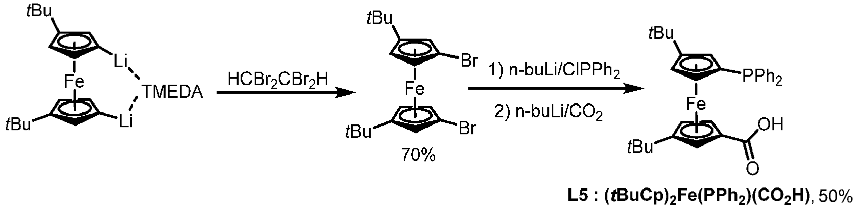

### Preparation of L6

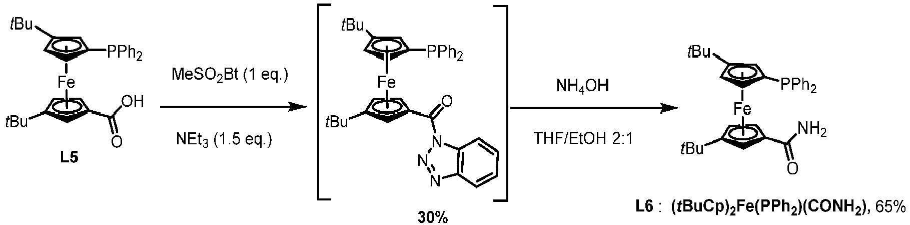

### General procedure for the synthesis of Ru NPs stabilized by ferrocenyl-polyphosphines and monophosphines hybrids ligands L1 - L6

The bis(2-methylallyl)(1,5-cyclooctadiene)ruthenium(II) complex (0.79 mmol) and the desired ligand **(L1-L6)** were introduced in a Fisher-Porter bottle and left in vacuum during 30 minutes. 80 mL of anhydrous tetrahydrofuran (THF) were then added and the mixture was stirred 1 h under argon at 20 °C. The resulting clear solution was pressurized with 3 bars of H₂. The solution was kept under stirring and heated overnight at 60 °C. After this period of time, excess of H₂ was eliminated and the volume of the solvent was reduced to approximately 10 mL under vacuum. 40 mL of pentane was then added to the colloidal suspension. After 2 hours, the black precipitate was washed with pentane and the solvent was removed after centrifugation giving rise to the particles as dark powders.

### General procedure for dehydrogenation of amine-borane (AB) with catalyst recycling

A solution of ammonia-borane (AB, NH₃BH₃) in solvent (4 mL, 1 mmol AB) was added to a colloidal suspension of the Ru nanoparticles (0.02 mmol Ru) in solvent (2 mL) thermostated to 25 °C using syringe under stirring at 600 rpm in 25 mL double-necked round-bottomed flask. H₂ generation was monitored by registering the increase of pressure in a gas burette. In the case of AB dehydrogenation experiments with catalyst recycling, the catalyst was recovered by centrifugation and washed 3 times with pentane in order to use it for the next cycle. Solvent (2 mL) and a solution of AB in solvent (4 mL, 1 mmol) were successively added to the nanoparticles and Hz generation was again monitored. The process was repeated over five times.

### Preparation of non-stabilized particles (comparative examples)

The bis(2-methylallyl)(1,5-cyclooctadiene)ruthenium(II) complex is pressurized with 3 bars of H₂ in THF at 60 °C during 18 hours. After evaporation of THF, the particles are precipitated with pentane and recovered by centrifugation.

### Results of hydrolysis of ammonia-borane

The conditions of the hydrolysis of ammonia-borane at 298 K, are the following:
AB: 187 mM, H₂O 6 mL,
Ru: 0.02 mmol, 3.33 mM

The TOF (mol_{H2}.mol_{cat}⁻¹.min⁻¹) is calculated as follows: mmol H₂/(mmol Ru.min⁻¹).

| **Assay** | **Ru/L1-ratio** | **Reaction time (min)** | **TOF** | **Assay** | **Ru/L2-ratio** | **Reaction time (min)** | **TOF** |
|---|---|---|---|---|---|---|---|
| **1** | 20/1 | 1.67 | 101.0 | **5** | 20/1 | 1.0 | 167. 5 |
| **2** | 10/1 | 1.50 | 112.0 | **6** | 10/1 | 1.17 | 143. 6 |
| **3** | 5/1 | 1.83 | 91.0 | **7** | 5/1 | 3.17 | 53.0 |
| **4 (comparative Cx)** | 1/1 | 21.0 | 8.0 | **8 (comparative Cx)** | 1/1 | 19.0 | 8.0 |

| **Assay** | **Ru/L3-ratio** | **Reaction time (min)** | **TOF** | **Assay** | **Ru/L4-ratio** | **Reaction time (min)** | **TOF** |
|---|---|---|---|---|---|---|---|
| **9** | 20/1 | 1.67 | 67.0 | **13** | 20/1 | 1.33 | 126. 0 |
| **10** | 10/1 | 6.17 | 27.0 | **14** | 10/1 | 1.83 | 91.4 |
| **11** | 5/1 | 2.83 | 59.0 | **15** | 5/1 | 2.0 | 84.0 |
| **12 (comparative Cx)** | 1/1 | 13.0 | 11.0 | **16 (comparative Cx)** | 1/1 | 14.0 | 12.0 |

| **Assay** | **Ru/L5-ratio** | **Reaction time (min)** | **TOF** | **Assay** | **Ru/L6-ratio** | **Reaction time (min)** | **TOF** |
|---|---|---|---|---|---|---|---|
| **17** | 20/1 | 3.0 | 56.5 | **21** | 20/1 | 2.0 | 84.8 |
| **18** | 10/1 | 3.67 | 46.2 | **22** | 10/1 | 2.33 | 72.7 |
| **19** | 5/1 | 1.5 | 113.0 | **23** | 5/1 | 3.0 | 56.5 |
| **20 (comparative Cx)** | 1/1 | 29.0 | 6.0 | **Non-stabilized particles (Comparative 1)** | No ligand | 14.5 | 11 |

### Results of hydrolysis of ammonia-borane (AB) with different concentrations

| **Assay** | **Ru/L1-ratio** | **AB = 110 mM** | | **AB = 187 mM** | | **AB = 333 mM** | |
|---|---|---|---|---|---|---|---|
| | | **Reaction time (min)** | **TOF** | **Reaction time (min)** | **TOF** | **Reaction time (min)** | **TOF** |
| **24** | 20/1 | 1.7 | 65 | 1.7 | 114 | 2.5 | 164 |

| **Assay** | **Ru/L2-ratio** | **Reaction time (min)** | **TOF** | **Reaction time (min)** | **TOF** | **Reaction time (min)** | **TOF** |
|---|---|---|---|---|---|---|---|
| **25** | 20/1 | 0.8 | 131 | 1.0 | 168 | 1.3 | 224 |

| **Assay** | **Ru/L3-ratio** | **Reaction time (min)** | **TOF** | **Reaction time (min)** | **TOF** | **Reaction time (min)** | **TOF** |
|---|---|---|---|---|---|---|---|
| **26** | 20/1 | 2.5 | 42 | 2.5 | 67 | 5.8 | 52 |

| **Assay** | **Ru/L4-ratio** | **Reaction time (min)** | **TOF** | **Reaction time (min)** | **TOF** | **Reaction time (min)** | **TOF** |
|---|---|---|---|---|---|---|---|
| **27** | 20/1 | 1.3 | 101 | 1.7 | 126 | 1.8 | 199 |

| **Assay** | **Ru/L5-ratio** | **Reaction time (min)** | **TOF** | **Reaction time (min)** | **TOF** | **Reaction time (min)** | **TOF** |
|---|---|---|---|---|---|---|---|
| **28** | 5/1 | 1.0 | 99 | 1.5 | 113 | 2.2 | 115 |

| **Assay** | **Ru/L6-ratio** | **Reaction time (min)** | **TOF** | **Reaction time (min)** | **TOF** | **Reaction time (min)** | **TOF** |
|---|---|---|---|---|---|---|---|
| **29** | 5/1 | 2.3 | 42 | 3.0 | 56 | 3.5 | 73 |

| **Assay** | **Ru/L-ratio** | **Reaction time (min)** | **TOF** | **Reaction time (min)** | **TOF** | **Reaction time (min)** | **TOF** |
|---|---|---|---|---|---|---|---|
| **30 (compar ative 2)** | No ligand | 8.0 | 13 | 13.0 | 13 | 22.5 | 13 |

### Results of solvolysis of ammonia-borane with ethanol

| **Assay** | **Ru/L1-ratio** | **Reaction time (min)** | **TOF** | **Assay** | **Ru/L2-ratio** | **Reaction time (min)** | **TOF** |
|---|---|---|---|---|---|---|---|
| **31** | 20/1 | 6.5 | 26 | **32** | 20/1 | 2.3 | 72 |

| **Assay** | **Ru/L3-ratio** | **Reaction time (min)** | **TOF** | **Assay** | **Ru/L4-ratio** | **Reaction time (min)** | **TOF** |
|---|---|---|---|---|---|---|---|
| **33** | 20/1 | 6.8 | 24 | **34** | 20/1 | 4 | 46 |

| **Assay** | **Ru/L5-ratio** | **Reaction time (min)** | **TOF** | **Assay** | **Ru/L6-ratio** | **Reaction time (min)** | **TOF** |
|---|---|---|---|---|---|---|---|
| **35** | 10/1 | 2.8 | 64 | **36** | 5/1 | 1.8 | 92 |
| | | | | **Non-stabilized particles (Comparative 3)** | No ligand | 35 | 4 |

### Results of solvolysis of ammonia-borane with methanol

| **Assay** | **Ru/L1-ratio** | **Reaction time (min)** | **TOF** | **Assay** | **Ru/L2-ratio** | **Reaction time (min)** | **TOF** |
|---|---|---|---|---|---|---|---|
| **37** | 20/1 | 3.8 | 44 | **38** | 20/1 | 1 | 168 |

| **Assay** | **Ru/L3-ratio** | **Reaction time (min)** | **TOF** | **Assay** | **Ru/L4-ratio** | **Reaction time (min)** | **TOF** |
|---|---|---|---|---|---|---|---|
| **39** | 20/1 | 3.5 | 48 | **40** | 20/1 | 2.5 | 77 |

| **Assay** | **Ru/L5-ratio** | **Reaction time (min)** | **TOF** | **Assay** | **Ru/L6-ratio** | **Reaction time (min)** | **TOF** |
|---|---|---|---|---|---|---|---|
| **41** | 10/1 | 2 | 85 | **42** | 5/1 | 1.3 | 127 |
| | | | | **Non-stabilized particles (Comparative 4)** | No ligand | 28.5 | 5 |

The results clearly show that the nanoparticles of the present invention enable to deliver great amount of H₂ in reduced time with the use of water or alcohol as solvent, this in comparison to the complexes of the prior art (Assays **4, 8, 12, 16,** and **20, comparative Cx),** and also in comparison to the particles non-stabilized by the ditopic and polytopic metallocene ligands **L1-L6 (Comparative 1, 2, 3 and 4).** This is attributed in part to the organization in networks that contributes to both controlling the small size of nanoparticles, and favoring their global stability. Since the process can use different solvent and for example water and alcohol, it is thus implementable whatever the temperature, i. e. even if the temperature is well below 0 °C. At higher the activity measured in TOF (min⁻¹) is greatly enhanced above the present values.

### Results of hydro- or solvolysis of AB with recycling of the nanocatalysts over 5 cycles Results for the hydrolysis of non-stabilized particles

| | **1^{st} run** | **2^{nd} run** | **3^{rd} run** | **4^{th} run** | **5^{th} run** |
|---|---|---|---|---|---|
| **TOF (min⁻¹)** | 11 | 12 | 13 | 12 | 12 |

### Results for Ru/L1 (20/1)

| | **1^{st} run** | **2^{nd} run** | **3^{rd}** run | **4^{th} run** | **5^{th} run** |
|---|---|---|---|---|---|
| **Hydrolysis TOF (min⁻¹)** | 101 | 46 | 40 | 40 | 30 |
| **Ethanolysis TOF (min⁻¹)** | 26 | 35 | 32 | 36 | 37 |
| **Methanolysis TOF (min⁻¹)** | 44 | 72 | 72 | 67 | 77 |

### Results for Ru/L2 (20/1)

| | **1^{st} run** | **2^{nd} run** | **3^{rd} run** | **4^{th} run** | **5^{th} run** |
|---|---|---|---|---|---|
| **Hydrolysis TOF (min⁻¹)** | 168 | 63 | 63 | 56 | 56 |
| **Ethanolysis TOF (min⁻¹)** | 77 | 48 | 44 | 35 | 31 |
| **Methanolysis TOF (min⁻¹)** | 168 | 77 | 70 | 56 | 48 |

### Results for Ru/L3 (20/1)

| | **1^{st} run** | **2^{nd} run** | **3^{rd} run** | **4^{th} run** | **5^{th} run** |
|---|---|---|---|---|---|
| **Hydrolysis TOF (min⁻¹)** | 101 | 42 | 42 | 36 | 30 |
| **Ethanolysis TOF (min⁻¹)** | 25 | 29 | 32 | 32 | 29 |
| **Methanolysis TOF (min⁻¹)** | 48 | 53 | 50 | 53 | 50 |

### Results for Ru/L4 (20/1)

| | **1^{st} run** | **2^{nd} run** | **3^{rd} run** | **4^{th} run** | **5^{th} run** |
|---|---|---|---|---|---|
| **Hydrolysis TOF (min⁻¹)** | 126 | 112 | 72 | 63 | 42 |
| **Ethanolysis TOF (min⁻¹)** | 48 | 48 | 48 | 42 | 40 |
| **Methanolysis TOF (min⁻¹)** | 77 | 77 | 67 | 63 | 53 |

### Results for Ru/L5 (5/1)

| | **1^{st} run** | **2^{nd} run** | **3^{rd} run** | **4^{th} run** | **5^{th} run** |
|---|---|---|---|---|---|
| **Hydrolysis TOF (min⁻¹)** | 127.2 | 101.1 | 63.6 | 53.5 | 46.2 |
| **Methanolysis TOF (min⁻¹)** | 254.3 | 203.4 | 169.5 | 169.5 | 169.5 |

### Results for Ru/L6 (5/1)

| | **1^{st} run** | **2^{nd} run** | **3^{rd} run** | **4^{th} run** | **5^{th} run** |
|---|---|---|---|---|---|
| **Hydrolysis TOF (min⁻¹)** | 67 | 47.9 | 40.2 | 37.2 | 35.9 |
| **Methanolysis TOF (min⁻¹)** | 125.6 | 91.4 | 71.8 | 59.1 | 52.9 |

These results show that the nanocatalyst systems of the titled invention can be recycled in the process.

## Claims

1. Metallic nanoparticle stabilized by metallocene ligands,
wherein each 5-membered cycle of the metallocene is substituted by at least one group, identical or different, selected in the group consisting of:
- (CH₂)ₙ-XR²R³ wherein
• n is 0, 1, 2, 3 or 4, preferably 0 or 1, preferably 0;
• X is a metal-coordinating atom, preferably P, N, B, or Al, preferably P, N or B, preferably P or N, preferably P;
• R² and R³, identical or different, represent a C₅-C₁₀ aryl group, preferably phenyl; a C₅-C₁₀ cycloalkyl group, preferably cyclohexyl; a 5 to 10-membered heteroaryl comprising 1 or 2 heteroatoms, preferably O or N, and optionally substituted for example by C1-C5-alkyl group linear or branched, for example furyl; a 5 to 10-membered heterocycle comprising 1 or 2 heteroatoms, preferably O or N; or a C₁-C₃₀ preferably C₁-C₁₀ alkyl, more preferably C₁-C₅ alkyl group, linear or branched, saturated or unsaturated; preferably R² and R³, identical or different, represent phenyl, cyclohexyl, iso-propyl, tert-butyl or furyl; or R² and R³ can form with X, preferably when X is P, a 5 to 10-membered heterocycle that can comprise one heteroatom chosen among O, N, S, preferably N, and optionally substituted for example by C1-C5-alkyl group linear or branched and/or N(C1-C5-alkyl group linear or branched)₂;
- (CH₂)ₙ-COOR, wherein
• n is 0, 1, 2, 3 or 4, preferably 0 or 1, preferably 0;
• R, identical or different, represent H; a C₅-C₁₀ aryl group, preferably phenyl; a C₅-C₁₀ cycloalkyl group, preferably cyclohexyl; or a C₁-C₃₀ preferably C₁-C₁₀ alkyl, more preferably C₁-C₅ alkyl group, linear or branched, saturated or unsaturated; preferably R is H;
- (CH₂)ₙCOR, wherein
• n is 0, 1, 2, 3 or 4, preferably 0 or 1, preferably 0;
• R, identical or different, is H; a C₅-C₁₀ aryl group, preferably a phenyl group; a C₅-C₁₀ cycloalkyl group, preferably cyclohexyl; or a C₁-C₃₀ preferably C₁-C₁₀ alkyl, more preferably C₁-C₅ alkyl group, linear or branched, saturated or unsaturated; preferably R is H;
- (CH₂)ₙCONR⁴R⁵, wherein
• n is 0, 1, 2, 3 or 4, preferably 0 or 1, preferably 0;
• R⁴ and R⁵, identical or different, represent H, a C₅-C₁₀ aryl group, preferably a phenyl group; a C₅-C₁₀ cycloalkyl group, preferably cyclohexyl; or a C₁-C₃₀ preferably C₁-C₁₀ alkyl, more preferably C₁-C₅ alkyl group, linear or branched, saturated or unsaturated or R⁴ and R⁵ can form together with the N atom a 5 to 10-membered heterocycle; preferably R⁴ and R⁵ are H;
with the condition that at least one of the 5-membered cycle of the metallocene is substituted by at least one (CH₂)ₙ-PR²R³ group;
wherein each 5-membered cycle of the metallocene is optionally substituted by one or more, preferably one, R¹, identical or different, selected in the group consisting of a group of formula CR⁶₃ wherein R⁶ is a C₁-C₃₀ alkyl, preferably C₁-C₁₀ alkyl, more preferably C₁-C₅ alkyl group, linear or branched, saturated or unsaturated optionally comprising at least one heteroatom preferably O or N; a gem-dimethyl group of following formula R⁷-C(CH₃)₂, wherein R⁷ is a C₁-C₃₀ alkyl, preferably C₁-C₁₀ alkyl, more preferably C₁-C₅ alkyl group, linear or branched, saturated or unsaturated optionally comprising at least one heteroatom preferably O or N;
wherein the metal of the metallocene is selected in the group consisting of Fe, Ni, Co, Cr, V, Rh, Ru, Os, Re, preferably Fe; and
wherein the atomic ratio of the metal of the nanoparticle to the metal of the metallocene is equal or greater than 5/1, preferably comprised between 5/1 and 20/1, preferably comprised between 10/1 and 20/1.

2. Metallic nanoparticle according to claim 1, wherein the metal of the nanoparticle is ruthenium, nickel, platinum, rhodium or cobalt, preferably ruthenium or nickel, preferably nickel.

3. Metallic nanoparticle according to claim 1 or 2, wherein:
- in (CH₂)ₙ-XR²R³ :
• n is 0 or 1, preferably 0;
• X is P or N, preferably P;
• R² and R³, identical or different, represent a C₅-C₁₀ aryl group, preferably phenyl; a C₅-C₁₀ cycloalkyl group, preferably cyclohexyl; or a C₁-C₃₀ preferably C₁-C₁₀ alkyl, more preferably C₁-C₅ alkyl group, linear or branched, saturated or unsaturated; preferably R² and R³, identical or different, represent phenyl or cyclohexyl;
- in (CH₂)ₙ-COOR:
• n is 0 or 1, preferably 0;
• R, identical or different, is H; a C₅-C₁₀ aryl group, preferably phenyl; a C₅-C₁₀ cycloalkyl group, preferably cyclohexyl; or a C₁-C₃₀ preferably C₁-C₁₀ alkyl, more preferably C₁-C₅ alkyl group, linear or branched, saturated or unsaturated; preferably R is H;
- In (CH₂)ₙCONR⁴R⁵:
• n is 0 or 1, preferably 0;
• R⁴ and R⁵, identical or different, represent H, a C₅-C₁₀ aryl group, preferably phenyl; a C₅-C₁₀ cycloalkyl group, preferably cyclohexyl; or a C₁-C₃₀ preferably C₁-C₁₀ alkyl, more preferably C₁-C₅ alkyl group, linear or branched, saturated or unsaturated; preferably R⁴ and R⁵ are H.

4. Metallic nanoparticle according to any one of claims 1 to 3, wherein the metal of the metallocene is Fe.

5. Metallic nanoparticle according to any one of claims 1 to 4, wherein the metallocene is chosen among compound having the following formula (I), (II) or (III): 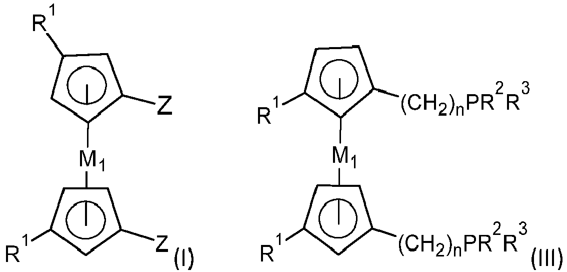 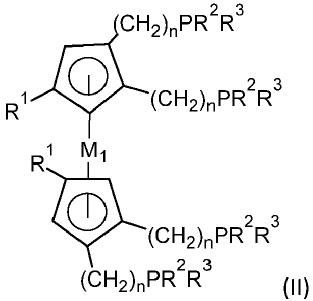 wherein:
n is 0 or 1;
Z is selected in the group consisting of:
- (CH₂)ₙ-XR²R³ wherein
• R² and R³, identical or different, represent a C₅-C₁₀ aryl group, preferably phenyl; a C₅-C₁₀ cycloalkyl group, preferably cyclohexyl; a 5 to 10-membered heteroaryl comprising 1 or 2 heteroatoms, preferably O or N, and optionally substituted for example by C1-C5-alkyl group linear or branched, for example furyl; a 5 to 10-membered heterocycle comprising 1 or 2 heteroatoms, preferably O or N; or a C₁-C₃₀ preferably C₁-C₁₀ alkyl, more preferably C₁-C₅ alkyl group, linear or branched, saturated or unsaturated; preferably R² and R³, identical or different, represent phenyl, cyclohexyl, iso-propyl, tert-butyl or furyl; or R² and R³ can form with X, preferably when X is P, a 5 to 10-membered heterocycle that can comprise one heteroatom chosen among O, N, S, preferably N, and optionally substituted for example by C1-C5-alkyl group linear or branched and/or N(C1-C5-alkyl group linear or branched)₂;
- (CH₂)ₙ-COOR, wherein
• R, identical or different, is H; a C₅-C₁₀ aryl group, preferably phenyl; a C₅-C₁₀ cycloalkyl group, preferably cyclohexyl; or a C₁-C₃₀ preferably C₁-C₁₀ alkyl, more preferably C₁-C₅ alkyl group, linear or branched, saturated or unsaturated; preferably R is H;
- (CH₂)ₙCOR, wherein
• R, identical or different, is H; a C₅-C₁₀ aryl group, preferably phenyl; a C₅-C₁₀ cycloalkyl group, preferably cyclohexyl; or a C₁-C₃₀ preferably C₁-C₁₀ alkyl, more preferably C₁-C₅ alkyl group, linear or branched, saturated or unsaturated; preferably R is H;
- (CH₂)ₙCONR⁴R⁵, wherein
• R⁴ and R⁵, identical or different, represent H; a C₅-C₁₀ aryl group, preferably a phenyl group; a C₅-C₁₀ cycloalkyl group, preferably cyclohexyl; or a C₁-C₃₀ preferably C₁-C₁₀ alkyl, more preferably C₁-C₅ alkyl group, linear or branched, saturated or unsaturated; preferably R⁴and R⁵ are H;
preferably Z is (CH₂)ₙ-XR²R³, (CH₂)ₙ-COOR, (CH₂)ₙCONR⁴R⁵;
with the condition that at least one of the 5-membered cycle of the metallocene is substituted by a (CH₂)ₙ-PR²R³ group;
R¹, identical or different, selected in the group consisting of a group of formula CR⁶₃ wherein R⁶ is a C₁-C₃₀ alkyl, preferably C₁-C₁₀ alkyl, more preferably C₁-C₅ alkyl group, linear or branched, saturated or unsaturated optionally comprising at least one heteroatom preferably O or N; a gem-dimethyl group of following formula R⁷-C(CH₃)₂, wherein R⁷ is a C₁-C₃₀ alkyl, preferably C₁-C₁₀ alkyl, more preferably C₁-C₅ alkyl group, linear or branched, saturated or
unsaturated optionally comprising at least one heteroatom preferably O or N; and
M₁ is selected in the group consisting of Fe, Ni, Co, Cr, V, Rh, Ru, Os, Re, preferably Fe.

6. Metallic nanoparticle according to any one of claims 1 to 5, wherein the metallocene is chosen among compound having the following formula (I) or (II) 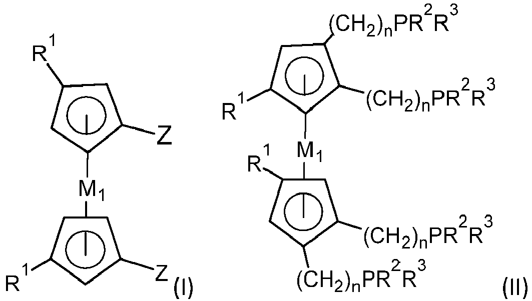
wherein Z, identical or different is (CH₂)ₙ-PR²R³
n is 0 or 1,
R² and R³, identical or different represent, a C₅-C₁₀ aryl group, preferably a phenyl group; a C₅-C₁₀ cycloalkyl group, preferably cyclohexyl; or a C₁-C₃₀ preferably C₁-C₁₀ alkyl, more preferably C₁-C₅ alkyl group, linear or branched, saturated or unsaturated, preferably R² and R³, identical or different represent phenyl, cyclohexyl, iso-propyl, tert-butyl or furyl;
R¹, identical or different, selected in the group consisting of a group of formula CR⁶₃ wherein R⁶ is a C₁-C₃₀ alkyl, preferably C₁-C₁₀ alkyl, more preferably C₁-C₅ alkyl group, linear or branched, saturated or unsaturated optionally comprising at least one heteroatom preferably O or N; a gem-dimethyl group of following formula R⁷-C(CH₃)₂, wherein R⁷ is a C₁-C₃₀ alkyl, preferably C₁-C₁₀ alkyl, more preferably C₁-C₅ alkyl group, linear or branched, saturated or unsaturated optionally comprising at least one heteroatom preferably O or N.

7. Metallic nanoparticle according to any one of claims 1 to 6, wherein R¹ is tert-butyl.

8. Metallic nanoparticle according to any one of claims 1 to 7, wherein each 5-membered cycle of the metallocene is substituted by at least one group, identical or different, of formula (CH₂)ₙ-XR²R³ such as defined above with X is P, and the nanoparticles are arranged in the form of a network of different nanoparticles linked by the metallocene ligand

9. Use of a metallic nanoparticle according to any one of claims 1 to 8, as catalyst for the recovery of H₂ by hydrolysis or solvolysis of amine-borane or hydrazine-borane compounds, wherein the solvent is preferentially a polar hydrogen donor, more preferentially an alcohol, more preferentially methanol or ethanol.

10. Process for recovering H₂ from amine-borane or hydrazine-borane comprising hydrolysis or solvolysis of the amine-borane in the presence of a metallic nanoparticle according to any one of claims 1 to 8.

11. Use according to claim 9 or process according to claim 10 wherein the amine-borane is of formula NR₂'H-BH₃ or BH₃-NR₂'-(CH₂)ₘ- NR₂'-BH₃, wherein R' identical or different, represent H, a C₅-C₁₀ aryl group, preferably a phenyl group; or a C₁-C₃₀, preferably C₁-C₁₀ alkyl, more preferably C₁-C₅ alkyl group, linear or branched, saturated or unsaturated, m is 1, 2 or 3, preferably, the amine-borane is NH₃-BH₃ (AB), NMeH₂-BH₃ (methylamineborane MeAB), NMe₂H-BH₃ (dimethyl amine-borane DMAB) or H₃B-NH₂CH₂CH₂H₂N-BH₃ (ethylene diamine bisborane EDAB).

12. Use according to any one of claims 9 or 11 or process according to any one of claims 10 to 12, wherein the solvolysis is carried out using ethanol or methanol.

13. Process according to any one of claims 10 to 12 wherein the reaction is carried out at a temperature comprised between -90 °C and 100 °C, preferably between -40 °C and 80 °C, more preferentially between 0 °C and 30 °C, more preferentially 20 °C.

14. Process according to any one of claims 10 to 13 further comprises a step of recycling the nanoparticles.

15. Process according to claim 14 wherein the recycling is carried out by recovering the nanoparticles and washing the recovered nanoparticles with the solvent used for the hydrolysis or solvolysis of the amine-borane or hydrazine-borane.
